# EUROPEAN PATENT SPECIFICATION

(11) **EP 4 136 722 B1**
(45) Date of publication and mention of the grant of the patent: **10.07.2024**
(21) Application number: 21720550.9
(22) Date of filing: 14.04.2021
(51) Int. Cl.: H02G 3/00, H02G 3/30

(54) **SUPPORT BRACKET FOR CABLE TRAYS**
TRAGARM FÜR KABELRINNEN
CONSOLE DE SUPPORT D'UN CHEMIN DE CÂBLES

(30) Priority: 17.04.2020 ES 202030661 U
(43) Date of publication of application: 22.02.2023
(73) Proprietor: Unex Aparellaje Electrico S.L., 08005 Barcelona (ES)
(72) Inventor: JOSÉ ANTONIO, Mostazo Oviedo, 08903 L'Hospitalet de Llobregat (ES)
(74) Representative: Curell Suñol S.L.P.
(86) International application number: PCT/ES2021/070243
(87) International publication number: WO 2021/209665

(56) References cited:
- EP-A2- 2 388 876
- FR-A1- 2 866 163
- US-A- 2 336 604
- US-A- 5 154 385

## Description

### Field of the Invention

The invention is comprised in the field of cable tray devices which are used for guiding electric cables, fiber-optic cables, or cables of another type. The invention particularly relates to a support bracket which is fixed to a vertical support bar and intended for supporting a cable tray seated on said support bracket.

More specifically, the invention relates to a support bracket for cable trays, suitable for being fixed to a vertical support bar having a flat outer side, said support bracket being formed by a one-piece body made of a polymer material and comprising:
- a base for fixing the support bracket to a vertical support bar, said base comprising a flat support surface for said base to rest against the flat outer side of the vertical support bar, and at least one through hole traversing said base for the passage of a fixing screw; and
- an arm extending in a cantilever manner from said base and forming, on an upper face, a flat seating surface orthogonal to said flat support surface of the base for supporting a cable tray that is seated on said flat seating surface.

### State of the Art

A support bar structure which serves to support cable trays, as well as to directly fix some individual cables or small cable bundles to said support bars, is often built to install cables in a technical space, such as an industrial warehouse, for example. This structure usually comprises vertical support bars which are normally used for fixing support brackets on which cable trays are seated. These support brackets are fixed to the vertical support bars by means of fixing screws. Support brackets made of a polymer material of the type indicated above, in which the base has a continuous flat outer side, constituting the flat support surface, are known. Normally, in order to fix one of these support brackets to a vertical support bar, the installer must use at least two fixing screws to block the rotational movement of the support bracket. Moreover, the initial placement of the support bracket by the installer involves the difficulty of having to place the support bracket in the suitable position with respect to the vertical support bar before placing the screws. The fixing of the support brackets to the vertical support bars is often performed in hard-to-access places, with space restrictions and possibly at a great height. To that end, it is important for the installation operations to be performed as easily as possible

US5154385A discloses a support bracket according to the preamble of claim 1. FR2866163A1, US2336604A, and EP2388876A2 disclose various support brackets for cable trays, of the type indicated above.

### Description of the invention

The purpose of the invention is to provide a support bracket for cable trays of the type indicated above, allowing the installer to more easily perform the operations required for fixing the support brackets to the vertical support bars, without complicating the manufacture of the support bracket or making it more expensive.

This purpose is achieved by means of a support bracket as defined in claim 1 wherein the base comprises two side fins having the following characteristics:
- each of the side fins is formed on one side of the flat support surface of the base, such that said two side fins demarcate said flat support surface of the base;
- the side fins are parallel to one another, orthogonal to said flat support surface of the base, and orthogonal to the flat seating surface of the arm;
- the side fins project perpendicular to said flat support surface of the base.

As a result of this configuration, a support bracket and a vertical support bar can advantageously be used, both sized such that when the base of the support bracket is placed with its flat support surface against the flat outer side of the vertical support bar, said vertical support bar is tightly fitted between said side fins of the base. The rotation of the support bracket with respect to the vertical support bar about an axis orthogonal to the flat outer side thereof is thereby prevented. The installation is easier because when the installer places the support bracket against the vertical support bar, the side fins prevent said support bracket from rotating and sliding laterally. Furthermore, the side fins cause the support bracket to be arranged in the correct position at all times with respect to the vertical support bar before placing the fixing screws, whereby the installer can more easily place said fixing screws. An additional advantage is that as a result of the anti-rotation function of the side fins, it is possible to place a single fixing screw to fix the support bracket to the vertical support bar, with the assurance that the support bracket will not rotate when subjected to loads. This considerably facilitates installation, and furthermore reduces the number of required parts, and therefore the cost.

Preferably, the support bracket is made of an electrically insulating polymer material, such as PVC (polyvinyl chloride), for example, with a surface resistivity exceeding 100 MΩ (surface resistivity measured according to the EN 62631-3-2:2016 standard), and which can optionally be filled with reinforcement fibers.

In the preferred embodiments, the base comprises two side walls and a plurality of partitions joining said side walls to one another, and the flat support surface of the base is a discontinuous surface formed by edges of said partitions. This configuration can be readily obtained by molding and has the advantage of reducing the amount of polymer material required for forming the support bracket, and accordingly reducing the weight of this part. Preferably, the side fins are formed by a prolongation of the side walls of the base. This configuration facilitates obtaining the fins by molding. Furthermore, it has the advantage of the side walls serving as a visual guide to the installer for fitting the flat outer side of the vertical support bar between the two side fins.

Preferably, the edges of the two side fins, opposite the flat support surface of the base, are on one and the same plane parallel to said flat support surface of the base. This configuration of the side fins allows performing installations in which the support bracket is supported by said side fins on a flat surface, such as a wall or the bottom of a vertical bar formed by a wide U-shaped profile, for example.

In preferred embodiments, the base comprises at least one central protrusion projecting perpendicular to the flat support surface of the base and extending in the longitudinal direction of the side fins, such that said flat support surface of the base comprises two portions separated by said central protrusion. The central protrusion can be continuous or discontinuous in the longitudinal direction of the side fins. As will be seen below in the detailed description of embodiments, this configuration allows the support bracket to be fixed to a vertical support bar having a central rail on its flat outer side, such that the central protrusion of the base fits into this rail and thereby performs an anti-rotation function like the side fins do. When the vertical support bar is sized such that its flat outer side fits between the side fins, the central protrusion introduced into the rail reinforces the anti-rotation function of the side fins. When the flat outer side of the vertical support bar is narrower, the anti-rotation function is not performed by the side fins, but said function is performed by the central protrusion. Therefore, this configuration allows fixing the support bracket to various types of vertical support bar and obtaining the anti-rotation function that is described.

Preferably, the central protrusion is formed by the prolongation of at least two of said partitions joining the two side walls of the base and separated from one another in the longitudinal direction of the side fins. In this case, the protrusion is discontinuous in the longitudinal direction of the side fins. This configuration can be readily obtained by means of molding, which allows the support bracket to be made with less material and provides an effective anti-rotation function of the central protrusion.

Preferably, the central protrusion does not project with respect to the edges of the two side fins opposite the flat support surface of the base. In this sense, when the edges of the two side fins are on one and the same plane as described above, the central protrusion does not prevent performing installations in which the support bracket is supported by said side fins on a flat surface.

Preferably, the edges of the two side fins, opposite the flat support surface of the base, and the edges of the central protrusion, opposite said flat support surface of the base, are on one and the same plane parallel to said flat support surface of the base. This configuration has the advantage of allowing installations in which the support bracket is supported on a flat surface by the side fins and also by the central protrusion to be performed. A greater distribution of forces supporting the base against the flat surface is thereby obtained.

In preferred embodiments, the base comprises a transverse through hole for the passage of a fixing rod, traversing said base in a direction orthogonal to that of the through hole provided in the base for the passage of a fixing screw. As will be seen below in the detailed description of embodiments, this configuration allows the support bracket to be fixed to a vertical support bar formed by a wide U-shaped profile by placing the base inside the profile and threading a fixing rod through the transverse through hole.

The support bracket according to the invention as defined in claim 1 further comprises at least two pairs of transverse wings extending from the base on both sides of said base, such that the edges of said transverse wings are on two parallel planes separated from said base on both sides of said base. These two parallel planes are orthogonal to the flat support surface of the base and orthogonal to the flat seating surface of the arm. As will be shown below in the detailed description of embodiments, the pairs of transverse wings allow fitting the base between the walls of a vertical support bar formed by a U-shaped profile that is wider than the base, with the base supported in the flat bottom wall of the U-shaped profile. Preferably, one transverse wing of said pairs of transverse wings is formed by a prolongation of an upper wall of the arm forming on the upper face thereof the flat seating surface. More preferably, this prolongation of the upper wall of the arm forming the pair of transverse wings does not reach the plane parallel to the flat support surface of the base on which the edges of the two side fins are arranged. When the base rests on a flat surface, such as the flat bottom wall of a U-shaped profile, for example, by the edges of the side fins, this configuration prevents the generation of a closed corner where dirt and rainwater may accumulate. Preferably, the other one of the pairs of transverse wings is formed by the prolongation of a lower wall of the arm. More preferably, the prolongation of the lower wall of the arm forming the pair of transverse wings does not reach said plane parallel to the flat support surface of the base on which the edges of the two side fins are arranged. The generation of a closed corner where dirt and rainwater may accumulate is thereby prevented. The invention also comprises other detail features shown in the following detailed description of embodiments of the invention and in the attached figures.

### Brief Description of the Drawings

The advantages and features of the invention are apparent from the following description in which preferred embodiments of the invention are described in a non-limiting manner with respect to the scope of the main claim in reference to the figures.
Figure 1 is a first perspective view of an embodiment of the support bracket.
Figure 2 is a second perspective view of the support bracket.
Figure 3 is a third perspective view of the support bracket.
Figures 4 to 7 are a side view, a top view, a rear view, and a front view, respectively, of the support bracket.
Figure 8 is an enlarged view of a detail of Figure 5, showing the area around the base.
Figure 9 is a perspective view of the support bracket fixed to a preferred first vertical support bar.
Figure 10 is a top view of the support bar of Figure 9.
Figure 11 is a top view of a detail of the assembly of Figure 9, showing the coupling between the base of the support bracket and the vertical support bar.
Figure 12 is a perspective view showing an example of a cable tray supported by the assembly of Figure 9.
Figure 13 is a perspective view of the support bracket fixed to a possible second vertical support bar.
Figure 14 is a top view of a detail of the assembly of Figure 13, showing the coupling between the base of the support bracket and the second vertical support bar.
Figure 15 is a perspective view of the support bracket fixed to a possible third vertical support bar.
Figure 16 is a top view of a detail of the assembly of Figure 15, showing the coupling between the base of the support bracket and the third vertical support bar.
Figure 17 is a perspective view of the support bracket fixed to the third vertical support bar, but with a fixing system other than the one shown in Figures 15-16.
Figure 18 is a top view of a detail of the assembly of Figure 17, showing the coupling between the base of the support bracket and the third vertical support bar.

### Detailed Description of Embodiments of the Invention

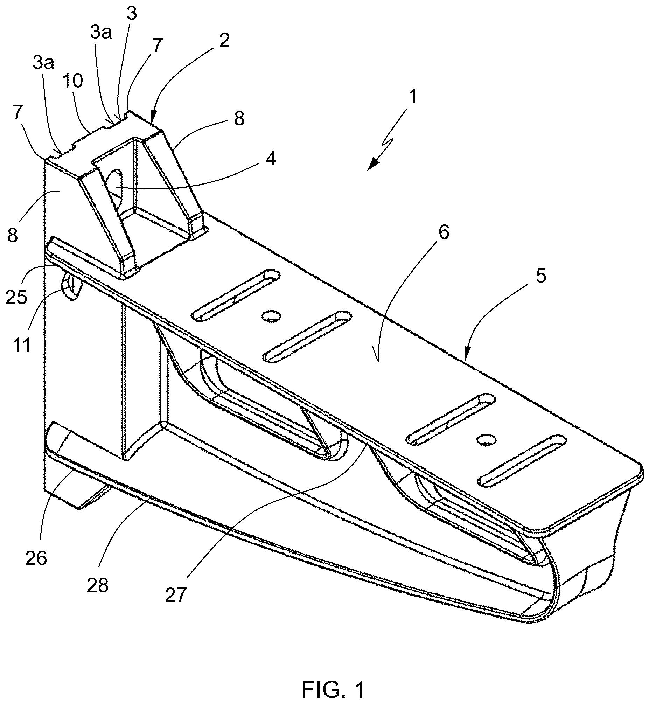

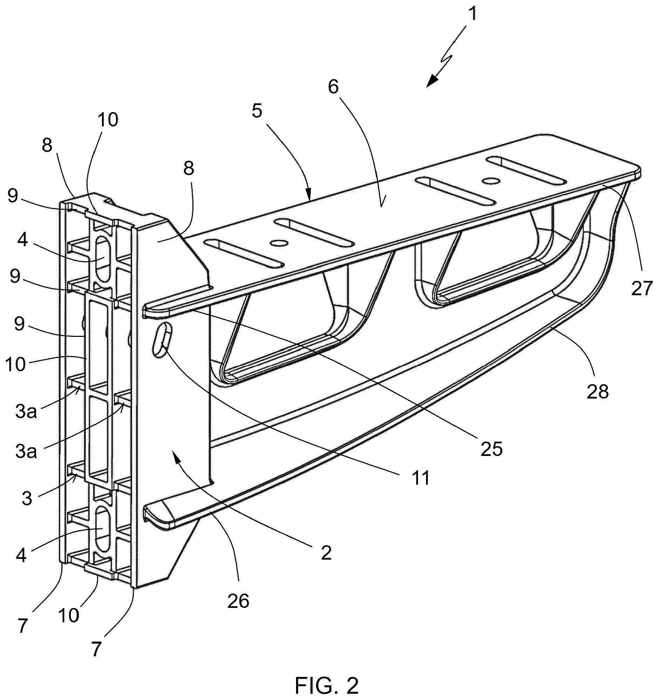

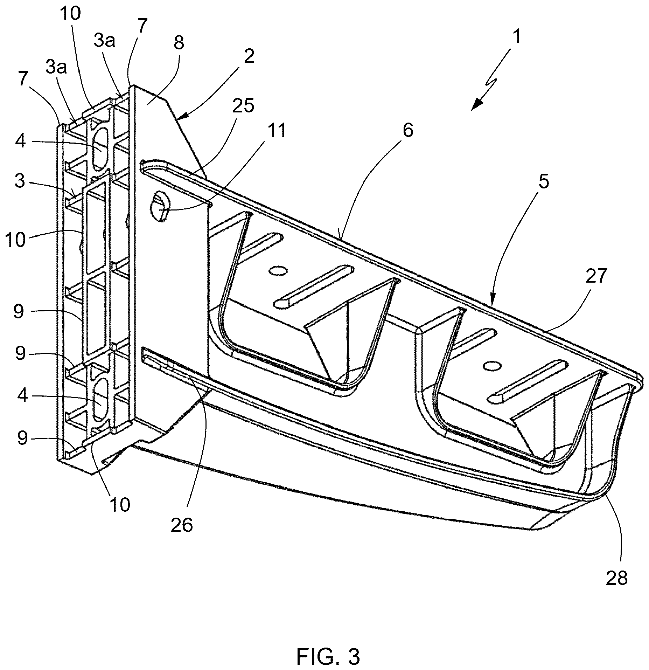

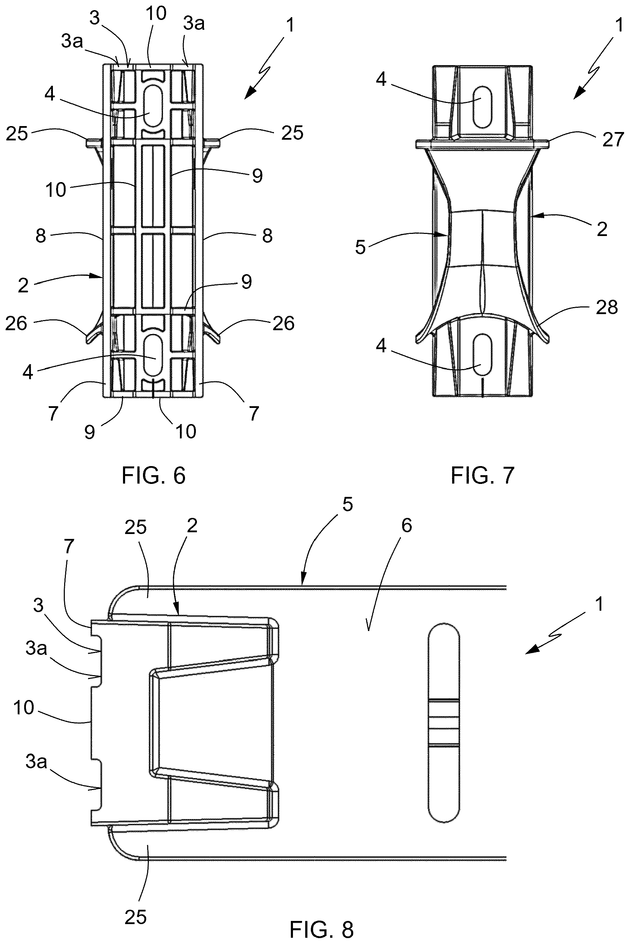

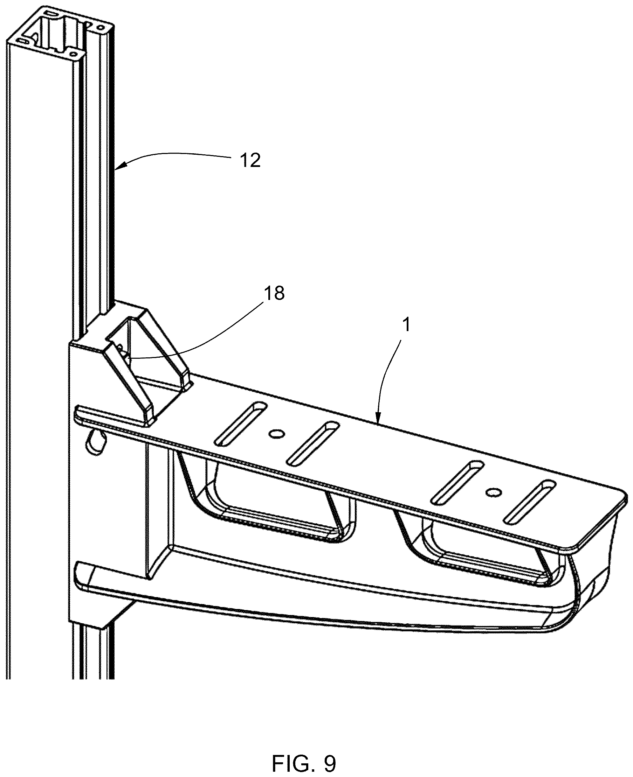

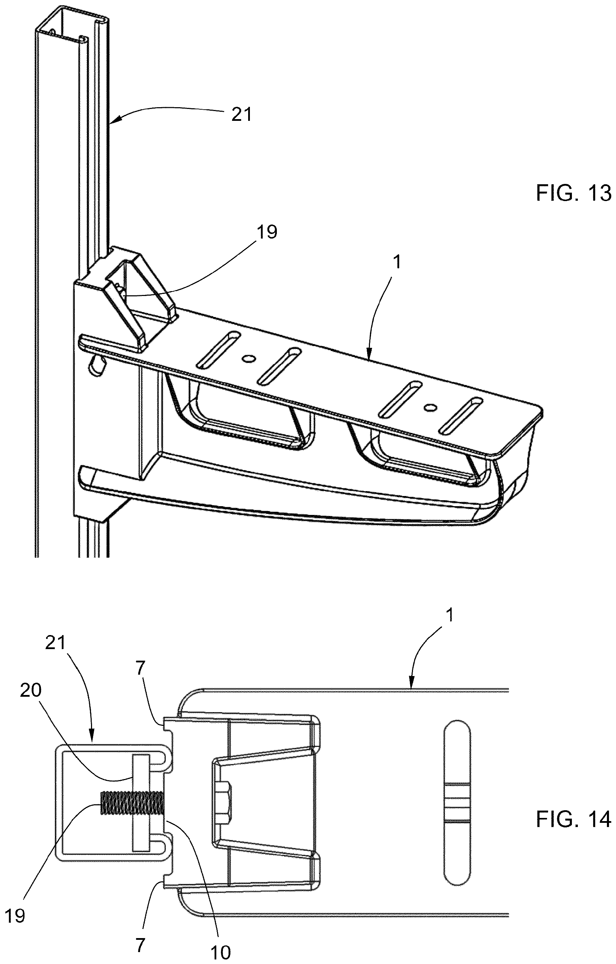

Figures 1 to 8 show a preferred embodiment of the support bracket according to the invention. The support bracket 1 is formed by a one-piece body made of a polymer material obtained by molding. The polymer material from which the support bracket 1 is molded is an electrically insulating material. The polymer material can be a thermoplastic such as PVC or a thermosetting resin, for example. The support bracket 1 is mainly intended for being fixed to a vertical support bar such as the bar 12 shown in Figures 9 to 12, having a flat outer side. The support bracket 1 can also be fixed to other types of vertical support bars, as will be described below in reference to Figures 13 to 18.

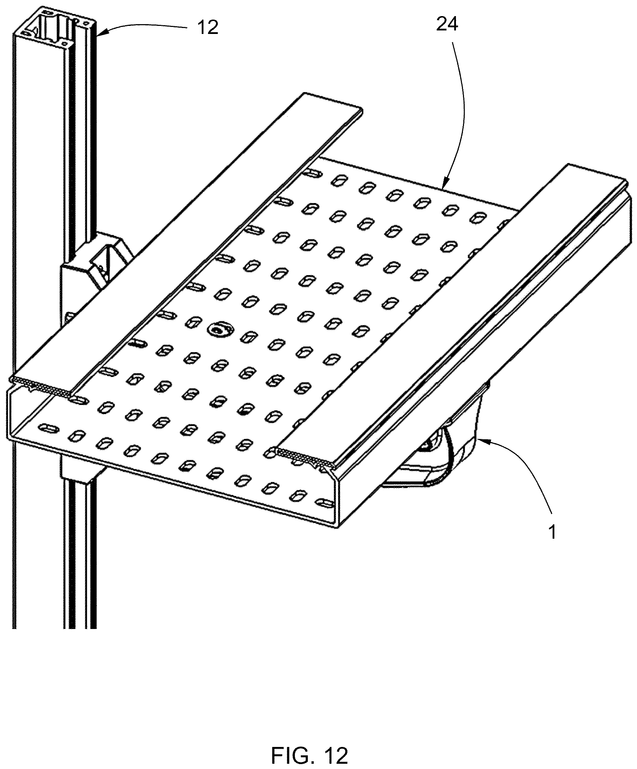

The support bracket 1 is fixed to a vertical support bar for supporting a cable tray seated on said support bracket 1, as shown by way of example in Figure 12. To that end, the support bracket 1 comprises a base 2 and an arm 5 extending in a cantilever manner from said base 2. The base 2 comprises a flat support surface 3 for said base 2 to rest against the flat outer side of the vertical support bar and at least one through hole 4 traversing said base 2 for the passage of a fixing screw. In the example depicted in the figures, the base 2 has two through holes 4. The upper face of the arm 5 forms a flat seating surface 6 orthogonal to the flat support surface 3 of the base 2, intended for supporting a cable tray seated on said flat seating surface 6.

The base 2 comprises two side fins 7, each formed on one side of the flat support surface 3, such that they demarcate said flat support surface 3. The side fins 7 are parallel to one another, orthogonal to the flat support surface 3 of the base 2, and orthogonal to the flat seating surface 6 of the arm 5. Furthermore, the side fins 7 project perpendicular to the flat support surface 3 of the base 2. As will be seen below, these side fins 7 provide an anti-rotation fitting of the support bracket 1 in the flat outer side of a vertical support bar. In the embodiment depicted in the figures, the base 2 comprises two side walls 8 joined to one another by a plurality of partitions 9 arranged by way of a grid, such that the edges of said partitions 9 form the flat support surface 3 which is therefore a discontinuous surface. The side walls 8 are prolonged along the entire length thereof such that their edge projects with respect to the flat support surface 3. This prolongation of the side walls 8 thereby constitutes the side fins 7. Some of the partitions 9 are prolonged such that they protrude with respect to the flat support surface 3, thereby forming a discontinuous central protrusion 10 projecting perpendicular to said flat support surface 3 and extending in the longitudinal direction of the side fins 7. The central protrusion 10 separates the flat support surface 3 into two portions 3a. In the embodiment depicted in the figures, the discontinuous central protrusion 10 is formed by three aligned segments separated from one another in the longitudinal direction of the side fins 7. A first segment of the central protrusion 10 is a prolongation of the central portion of a partition 9 joining the two side walls 8 at a first end of the base 2. A second segment of the central protrusion 10 is a prolongation identical to the preceding one in the central portion of a partition 9 joining the two side walls at a second end of the base 2 opposite the first end. A third segment of the central protrusion 10 is a prolongation of a grid of rectangular-shaped partitions 9 which is located in a central portion of the base 2 and has the same width as the first and second segments. The edges of the two side fins 7, opposite the flat support surface 3, and the edges of the central protrusion 10, opposite said flat support surface 3, are on one and the same plane parallel to said flat support surface 3. Therefore, the central protrusion 10 does not project with respect to the edges of the two side fins 7 opposite the flat support surface 3, but is coplanar therewith. The base 2 comprises a transverse through hole 11 traversing it in a direction orthogonal to that of the through hole 4 and intended for the passage of a fixing rod, as will be seen below.

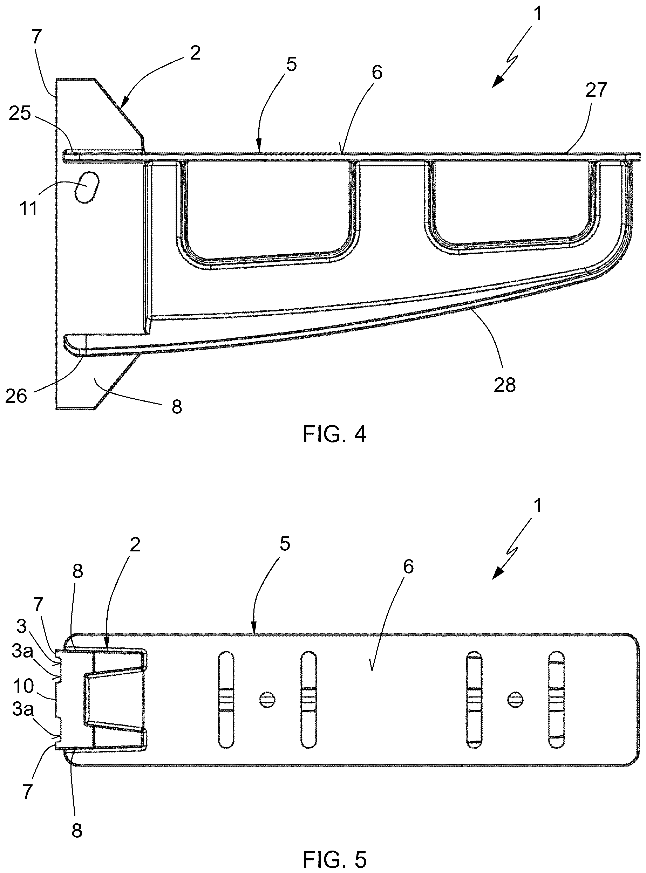

The arm 5 has an upper wall 27 forming, on the upper face thereof, the flat seating surface 6. This upper wall 27 is prolonged on both sides of the base 2, thereby forming a first pair of transverse wings 25 extending from said base 2 on both sides thereof. The arm 5 furthermore has a lower wall 28 which is prolonged on both sides of the base 2, thereby forming a second pair of transverse wings 26 extending from said base 2 on both sides thereof. As can be seen in Figures 4 to 6, the edges of the two pairs of transverse wings 25, 26 are on two parallel planes separated from the base 2 on both sides of said base 2. These parallel planes are orthogonal to the flat support surface 3 of the base 2 and orthogonal to the flat seating surface 6 of the arm 5. None of the prolongations of the upper wall 27 and the lower wall 28 of the arm 5, forming the two pairs of transverse wings 25 and 26, respectively, reaches the plane parallel to the flat support surface 3 on which the edges of the two side fins 7 are arranged.

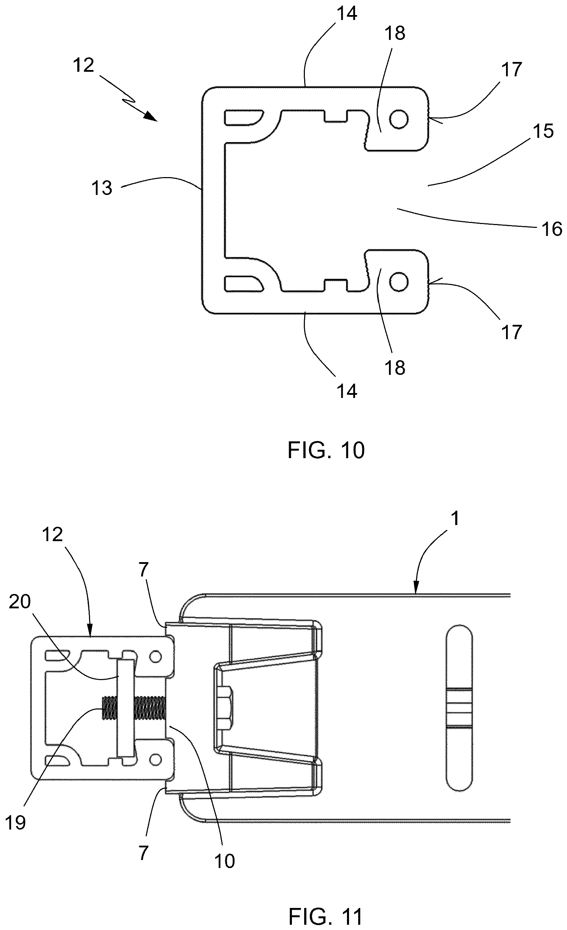

Figures 9 to 12 show the support bracket 1 fixed to a preferred first vertical support bar 12. The vertical support bar 12 is a hollow profile extruded from a polymer material, preferably an electrically insulating material, such as a thermoplastic such as PVC or a thermosetting resin, for example. As can be seen in Figure 10, the profile is in the form of a rail, with an outer perimeter with a rectangular cross-section and comprises a base wall 13, two side walls 14 facing one another, and an open wall 15 facing the base wall 13. The open wall 15 comprises a continuous opening 16 extending along the entire length of the vertical support bar 12. The open wall 15 therefore has a flat outer surface 17 extending on both sides of the continuous opening 16. The side walls 14 form at their upper end two facing protrusions 18 projecting towards the inside of the vertical support bar 1. Each of the protrusions 18 has a lower face oriented towards the base wall 13. Other variants of this profile constituting the vertical support bar 12, with the characteristics described but with shapes different from the shape shown in Figure 10, are envisaged.

Figure 11 shows the coupling between the support bracket 1 and the vertical support bar 12. The two portions 3a of the flat support surface 3 of the base 2 rest on the two portions forming the flat outer surface 17 in the open wall 15 of the vertical support bar 12. The central protrusion 10 is tightly introduced into the continuous opening 16 and the two side fins 7 externally clamp the vertical support bar 12. Both the side fins 7 and the central protrusion 10 prevent the vertical support bar 12 from being able to rotate with respect to an axis orthogonal to the flat support surface 3. Note that the central protrusion 10 is optional, since the side fins 7 alone provide an anti-rotation function. The support bracket 1 is fixed to the vertical support bar 12 by means of a screw 19 which traverses the base 2 through the through hole 4. Preferably, the screw 19 is screwed into a nut-like plate 20 which is introduced in the vertical support bar 12 and rests on the lower face of the protrusions 18 oriented towards the base wall 13.

Figures 13 and 14 show the support bracket 1 fixed to a second possible vertical support bar 21. In this case, the vertical support bar 21 is a U-shaped metallic profile having a section in the shape shown in Figure 14. This figure also shows the coupling between the support bracket 1 and the vertical support bar 21. The two portions 3a of the flat support surface 3 of the base 2 rest on the two ends of the side walls of the U-shaped profile, forming an open wall in a plane. The central protrusion 10 fits tightly in the continuous opening of the U-shaped profile, thereby providing the anti-rotation function. In the example depicted in the figures, the vertical support bar 21 is narrower, such that the two side fins 7 are separated from the side walls of said vertical support bar 21 and do not provide the anti-rotation function. Fixing is performed in the same manner as described previously for the first vertical support bar 12: a fixing screw 19 which traverses the base 2 through the through hole 4 and screwed onto a nut-like plate 20 which is introduced in the vertical support bar 21 is used. In this case, the plate 21 rests against ends of the side walls of the U-shaped profile which are bent towards the base wall of said profile.

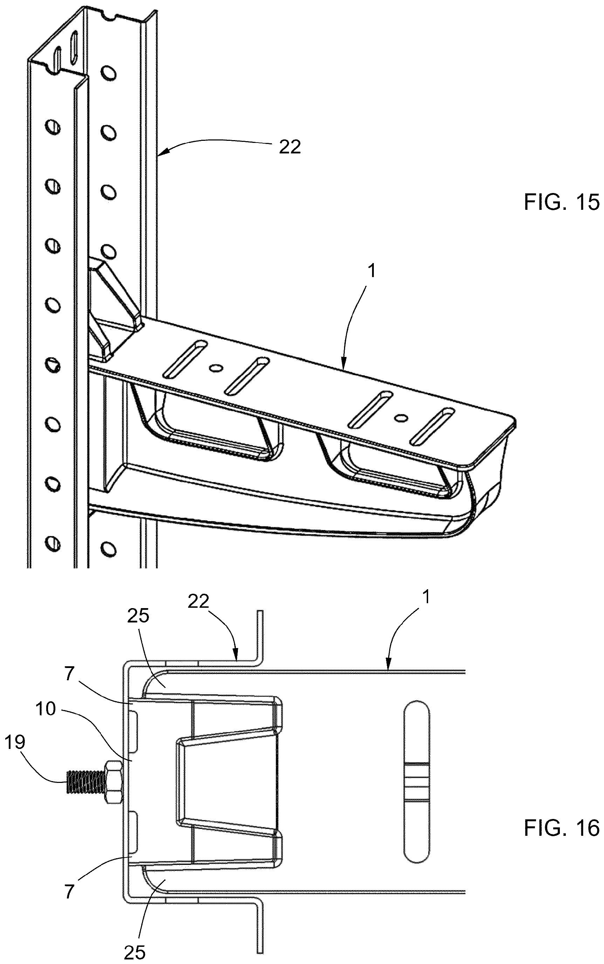

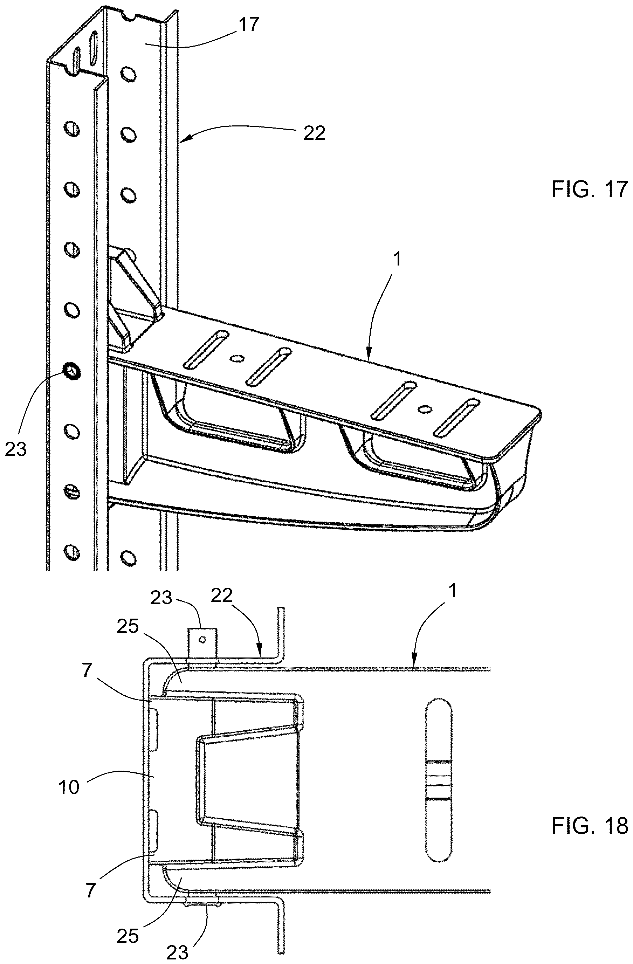

Figures 15 and 16 show the support bracket 1 fixed to a possible third vertical support bar 22. In this case, the vertical support bar 22 is a U-shaped metallic profile having a section in the shape shown in Figure 16. This figure also shows the coupling between the support bracket 1 and the vertical support bar 22. The base 2 rests on the flat bottom of the U-shaped profile by the side fins 7 and the central protrusion 10. As described above, this support on the flat bottom is possible due to the fact that the edges of the two side fins 7 and the edges of the central protrusion 10 are on one and the same plane parallel to the flat support surface 3. Fixing is performed by means of a fixing screw 19 which traverses the base 2 through the through hole 4 and also traverses the bottom wall of the U-shaped profile through a hole provided therein. The fixing screw 19 is screwed into a nut placed against the outer face of the base wall of the U-shaped profile. Figures 17 and 18 show another possible solution for fixing the support bracket 1 to the third vertical support bar 22. In this case, a fixing rod 23 which transversely traverses the base 2 through the transverse through hole 11 and also traverses the side walls of the U-shaped profile through holes provided therein is used. Figures 15 to 18 show that the two pairs of side fins 25, 26 are placed against the two side walls of the U-shaped profile, such that the base 2 is tightly fitted between these two side walls of the U-shaped profile. The two pairs of side wings 25, 26 thereby provide an anti-rotation function which, in this case, cannot be provided by the side fins 7 as they are arranged inside the U-shaped profile.

## Claims

1. A support bracket (1) for cable trays, suitable for being fixed to a vertical support bar having a flat outer side, said support bracket (1) being formed by a one-piece body made of a polymer material and comprising:
- a base (2) for fixing said support bracket (1) to a vertical support bar, said base (2) comprising a flat support surface (3) for said base (2) to rest against the flat outer side of the vertical support bar, and at least one through hole (4) traversing said base (2) for the passage of a fixing screw; and
- an arm (5) extending in a cantilever manner from said base (2) and forming, on an upper face, a flat seating surface (6) orthogonal to said flat support surface (3) of the base (2) for supporting a cable tray that is seated on said flat seating surface (6);
wherein said base (2) comprises two side fins (7) having the following characteristics:
- each of the side fins (7) is formed on one side of said flat support surface (3) of the base (2), such that said two side fins (7) demarcate said flat support surface (3) of the base (2);
- the side fins (7) are parallel to one another, orthogonal to said flat support surface (3) of the base (2), and orthogonal to said flat seating surface (6) of the arm (5);
- the side fins (7) project perpendicular to said flat support surface (3) of the base (2);
**characterized in that** it comprises at least two pairs of transverse wings (25, 26) extending from said base (2) on both sides of said base (2), such that the edges of said transverse wings (25, 26) are on two parallel planes separated from said base (2) on both sides of said base (2), said parallel planes being orthogonal to said flat support surface (3) of the base (2) and orthogonal to said flat seating surface (6) of the arm (5).

2. The support bracket (1) according to claim 1, **characterized in that** said base (2) comprises two side walls (8) and a plurality of partitions (9) joining said side walls (8) to one another, and said flat support surface (3) of the base (2) is a discontinuous surface formed by edges of said partitions (9).

3. The support bracket (1) according to claim 2, **characterized in that** said side fins (7) are formed by a prolongation of said side walls (8) of the base (2).

4. The support bracket (1) according to any one of claims 1 to 3, **characterized in that** the edges of said two side fins (7), opposite said flat support surface (3) of the base (2), are on one and the same plane parallel to said flat support surface (3) of the base (2).

5. The support bracket (1) according to any one of claims 1 to 4, **characterized in that** said base (2) comprises at least one central protrusion (10) projecting perpendicular to said flat support surface (3) of the base (2) and extending in the longitudinal direction of said side fins (7), such that said flat support surface (3) of the base (2) comprises two portions (3a) separated by said central protrusion (10).

6. The support bracket (1) according to claims 5 and 2, **characterized in that** said central protrusion (10) is formed by the prolongation of at least two of said partitions (9) separated from one another in the longitudinal direction of said side fins (7).

7. The support bracket (1) according to any one of claims 5 or 6, **characterized in that** said central protrusion (10) does not project with respect to the edges of said two side fins (7) opposite said flat support surface (3) of the base (2).

8. The support bracket (1) according to claim 7, **characterized in that** said edges of the two side fins (7), opposite said flat support surface (3) of the base (2), and the edges of said central protrusion (10), opposite said flat support surface (3) of the base (2), are on one and the same plane parallel to said flat support surface (3) of the base (2).

9. The support bracket (1) according to any one of claims 1 to 8, **characterized in that** said base (2) comprises a transverse through hole (11) for the passage of a fixing rod, traversing said base (2) in a direction orthogonal to that of said through hole (4) for the passage of a fixing screw.

10. The support bracket (1) according to any one of claims 1 to 9, **characterized in that** one transverse wing (25) of said pairs of transverse wings (25, 26) is formed by a prolongation of an upper wall (27) of said arm (5) forming on the upper face thereof said flat seating surface (6).

11. The support bracket (1) according to claims 10 and 4, **characterized in that** said prolongation of the upper wall (27) of the arm (5) forming the pair of transverse wings (25) does not reach said plane parallel to said flat support surface (3) of the base (2) on which the edges of said two side fins (7) are arranged.

12. The support bracket (1) according to any one of claims 10 or 11, **characterized in that** the other transverse wing (26) of said pairs of transverse wings (25, 26) is formed by the prolongation of a lower wall (28) of said arm (5).

13. The support bracket (1) according to claims 12 and 4, **characterized in that** said prolongation of the lower wall (28) of the arm (5) forming the pair of transverse wings (26) does not reach said plane parallel to said flat support surface (3) of the base (2) on which the edges of said two side fins (7) are arranged.

## Patentansprüche

1. Stützwinkel (1) für Kabelrinnen, der zur Befestigung an einer vertikalen Stützstange mit einer flachen Außenseite geeignet ist, wobei der Stützwinkel (1) aus einem einteiligen Körper aus einem Polymermaterial ausgebildet wird und umfasst:
- einen Sockel (2) zur Befestigung des Stützwinkels (1) an einer vertikalen Stützstange, wobei der Sockel (2) eine flache Auflagefläche (3) aufweist, damit der Sockel (2) an der flachen Außenseite der vertikalen Tragstange anliegt, und mindestens ein Durchgangsloch (4), das den Sockel (2) für den Durchgang einer Befestigungsschraube durchquert; und
- einen Arm (5), der sich freitragend von dem Sockel (2) erstreckt und auf einer oberen Fläche eine flache Sitzfläche (6) ausbildet, die orthogonal zu der flachen Stützfläche (3) des Sockels (2) ist, um eine Kabelrinne zu stützen, die auf der flachen Sitzfläche (6) aufsitzt;
wobei der Sockel (2) zwei seitliche Rippen (7) mit den folgenden Merkmalen aufweist:
- jede der seitlichen Rippen (7) ist auf einer Seite der flachen Auflagefläche (3) des Sockels (2) ausgebildet, so dass die seitlichen Rippen (7) die flache Auflagefläche (3) des Sockels (2) abgrenzen;
- die seitlichen Rippen (7) parallel zueinander, orthogonal zu der flachen Stützfläche (3) des Sockels (2) und orthogonal zu der flachen Sitzfläche (6) des Arms (5) sind;
- die seitlichen Rippen (7) senkrecht zu der flachen Auflagefläche (3) des Sockels (2) abstehen;
**dadurch gekennzeichnet, dass** dieser mindestens zwei Paare von Querflügeln (25, 26) umfasst, die sich von dem Sockel (2) auf beiden Seiten des Sockels (2) erstrecken, so dass die Kanten der Querflügel (25, 26) auf zwei parallelen Ebenen liegen, die von dem Sockel (2) auf beiden Seiten des Sockels (2) getrennt sind, wobei die parallelen Ebenen orthogonal zu der flachen Stützfläche (3) des Sockels (2) und orthogonal zu der flachen Sitzfläche (6) des Arms (5) sind.

2. Stützwinkel (1) nach Anspruch 1, **dadurch gekennzeichnet, dass** der Sockel (2) zwei Seitenwände (8) und eine Vielzahl von Trennwänden (9) umfasst, die die Seitenwände (8) miteinander verbinden, und die flache Stützfläche (3) des Sockels (2) eine diskontinuierliche Oberfläche ist, die durch Kanten der Trennwände (9) ausgebildet wird.

3. Stützwinkel (1) nach Anspruch 2, **dadurch gekennzeichnet, dass** die seitlichen Rippen (7) durch eine Verlängerung der Seitenwände (8) des Sockels (2) ausgebildet sind.

4. Stützwinkel (1) nach einem der Ansprüche 1 bis 3, **dadurch gekennzeichnet, dass** die Kanten der beiden seitlichen Rippen (7), die der ebenen Stützfläche (3) des Sockels (2) gegenüberliegen, in ein und derselben Ebene parallel zu der ebenen Stützfläche (3) des Sockels (2) liegen.

5. Stützwinkel (1) nach einem der Ansprüche 1 bis 4, **dadurch gekennzeichnet, dass** der Sockel (2) mindestens einen zentralen Vorsprung (10) aufweist, der senkrecht zu der ebenen Stützfläche (3) des Sockels (2) vorsteht und sich in Längsrichtung der seitlichen Rippen (7) erstreckt, so dass die ebene Stützfläche (3) des Sockels (2) zwei durch den zentralen Vorsprung (10) getrennte Abschnitte (3a) aufweist.

6. Stützwinkel (1) nach Anspruch 5 und 2, **dadurch gekennzeichnet, dass** der zentrale Vorsprung (10) durch die Verlängerung von mindestens zwei der Trennwände (9) gebildet wird, die in Längsrichtung der seitlichen Rippen (7) voneinander getrennt sind.

7. Stützwinkel (1) nach einem der Ansprüche 5 oder 6, **dadurch gekennzeichnet, dass** der zentrale Vorsprung (10) in Bezug auf die Kanten der beiden seitlichen Rippen (7) nicht gegenüber der ebenen Stützfläche (3) des Sockels (2) vorsteht.

8. Stützwinkel (1) nach Anspruch 7, **dadurch gekennzeichnet, dass** die Ränder der beiden seitlichen Rippen (7), die der flachen Stützfläche (3) des Sockels (2) gegenüberliegen, und die Ränder des zentralen Vorsprungs (10), die der flachen Stützfläche (3) des Sockels (2) gegenüberliegen, in ein und derselben Ebene parallel zu der flachen Stützfläche (3) des Sockels (2) liegen.

9. Stützwinkel (1) nach einem der Ansprüche 1 bis 8, **dadurch gekennzeichnet, dass** der Sockel (2) ein quer verlaufendes Durchgangsloch (11) für den Durchgang einer Befestigungsstange aufweist, das den Sockel (2) in einer Richtung durchquert, die orthogonal zu der des Durchgangslochs (4) für den Durchgang einer Befestigungsschraube ist.

10. Stützwinkel (1) nach einem der Ansprüche 1 bis 9, **dadurch gekennzeichnet, dass** ein Querflügel (25) der Paare von Querflügeln (25, 26) durch eine Verlängerung einer oberen Wand (27) des Arms (5) ausgebildet wird, die auf der Oberseite derselben die ebene Sitzfläche (6) bildet.

11. Stützwinkel (1) nach Anspruch 10 und 4, **dadurch gekennzeichnet, dass** die Verlängerung der oberen Wand (27) des Arms (5), der das Paar von Querflügeln (25) ausbildet, nicht bis zu der Ebene reicht, die parallel zu der ebenen Auflagefläche (3) des Sockels (2) verläuft, auf der die Kanten der beiden seitlichen Rippen (7) angeordnet sind.

12. Stützwinkel (1) nach einem der Ansprüche 10 oder 11, **dadurch gekennzeichnet, dass** der andere Querflügel (26) des Paares von Querflügeln (25, 26) durch die Verlängerung einer unteren Wand (28) des Arms (5) ausgebildet ist.

13. Stützwinkel (1) nach Anspruch 12 und 4, **dadurch gekennzeichnet, dass** die Verlängerung der unteren Wand (28) des Arms (5), der das Paar von Querflügeln (26) ausbildet, nicht bis zu der Ebene reicht, die parallel zu der ebenen Auflagefläche (3) des Sockels (2) verläuft, auf der die Kanten der beiden seitlichen Rippen (7) angeordnet sind.

## Revendications

1. Équerre de support (1) pour chemins de câbles, appropriée pour être fixée à une barre de support verticale présentant un côté extérieur plat, ladite équerre de support (1) étant formée par un corps d'un seul tenant constitué d'un matériau polymère et comprenant :
- une base (2) pour fixer ladite équerre de support (1) à une barre de support verticale, ladite base (2) comprenant une surface de support plate (3) pour que ladite base (2) repose contre le côté extérieur plat de la barre de support verticale, et au moins un trou traversant (4) traversant ladite base (2) pour le passage d'une vis de fixation; et
- un bras (5) s'étendant en porte-à-faux depuis ladite base (2) et formant, sur une face supérieure, une surface d'assise plate (6) orthogonale à ladite surface de support plate (3) de la base (2) pour supporter un chemin de câbles qui est assis sur ladite surface d'assise plate (6);
dans laquelle ladite base (2) comprend deux ailettes latérales (7) présentant les caractéristiques suivantes:
- chacune des ailettes latérales (7) est formée sur un côté de ladite surface de support plate (3) de la base (2), de sorte que lesdites deux ailettes latérales (7) délimitent ladite surface de support plate (3) de la base (2) ;
- les ailettes latérales (7) sont parallèles l'une à l'autre, orthogonales à ladite surface de support plate (3) de la base (2), et orthogonales à ladite surface d'assise plate (6) du bras (5);
- les ailettes latérales (7) font saillie perpendiculairement à ladite surface de support plate (3) de la base (2);
**caractérisée en ce qu'**elle comprend au moins deux paires d'ailes transversales (25, 26) s'étendant depuis ladite base (2) des deux côtés de ladite base (2), de sorte que les bords desdites ailes transversales (25, 26) soient sur deux plans parallèles séparés de ladite base (2) des deux côtés de ladite base (2), lesdits plans parallèles étant orthogonaux à ladite surface de support plate (3) de la base (2) et orthogonaux à ladite surface d'assise plate (6) du bras (5).

2. Équerre de support (1) selon la revendication 1, **caractérisée en ce que** ladite base (2) comprend deux parois latérales (8) et une pluralité de cloisons (9) joignant lesdites parois latérales (8) l'une à l'autre, et ladite surface de support plate (3) de la base (2) est une surface discontinue formée par des bords desdites cloisons (9).

3. Équerre de support (1) selon la revendication 2, **caractérisée en ce que** lesdites ailettes latérales (7) sont formées par une prolongation desdites parois latérales (8) de la base (2).

4. Équerre de support (1) selon l'une quelconque des revendications 1 à 3, **caractérisée en ce que** les bords desdites deux ailettes latérales (7), opposés à ladite surface de support plate (3) de la base (2), sont sur le même plan parallèle à ladite surface de support plate (3) de la base (2).

5. Équerre de support (1) selon l'une quelconque des revendications 1 à 4, **caractérisée en ce que** ladite base (2) comprend au moins une saillie centrale (10) faisant saillie perpendiculairement à ladite surface de support plate (3) de la base (2) et s'étendant dans la direction longitudinale desdites ailettes latérales (7), de sorte que ladite surface de support plate (3) de la base (2) comprenne deux parties (3a) séparées par ladite saillie centrale (10).

6. Équerre de support (1) selon les revendications 5 et 2, **caractérisée en ce que** ladite saillie centrale (10) est formée par la prolongation d'au moins deux desdites cloisons (9) séparées l'une de l'autre dans la direction longitudinale desdites ailettes latérales (7).

7. Équerre de support (1) selon l'une quelconque des revendications 5 ou 6, **caractérisée en ce que** ladite saillie centrale (10) ne fait pas saillie par rapport aux bords desdites deux ailettes latérales (7) opposés à ladite surface de support plate (3) de la base (2).

8. Équerre de support (1) selon la revendication 7, **caractérisée en ce que** lesdits bords des deux ailettes latérales (7) opposés à ladite surface de support plate (3) de la base (2), et les bords de ladite saillie centrale (10) opposés à ladite surface de support plate (3) de la base (2) sont sur le même plan parallèle à ladite surface de support plate (3) de la base (2).

9. Équerre de support (1) selon l'une quelconque des revendications 1 à 8, **caractérisée en ce que** ladite base (2) comprend un trou traversant transversal (11) pour le passage d'une tige de fixation, traversant ladite base (2) dans une direction orthogonale à celle dudit trou traversant (4) pour le passage d'une vis de fixation.

10. Équerre de support (1) selon l'une quelconque des revendications 1 à 9, **caractérisée en ce qu'**une aile transversale (25) desdites paires d'ailes transversales (25, 26) est formée par une prolongation d'une paroi supérieure (27) dudit bras (5) formant, sur la face supérieure de celle-ci, ladite surface d'assise plate (6).

11. Équerre de support (1) selon les revendications 10 et 4, **caractérisée en ce que** ladite prolongation de la paroi supérieure (27) du bras (5) formant la paire d'ailes transversales (25) n'atteint pas ledit plan parallèle à ladite surface de support plate (3) de la base (2) sur lequel les bords desdites deux ailettes latérales (7) sont agencés.

12. Équerre de support (1) selon l'une quelconque des revendications 10 ou 11, **caractérisée en ce que** l'autre aile transversale (26) desdites paires d'ailes transversales (25, 26) est formée par la prolongation d'une paroi inférieure (28) dudit bras (5).

13. Équerre de support (1) selon les revendications 12 et 4, **caractérisée en ce que** ladite prolongation de la paroi inférieure (28) du bras (5) formant la paire d'ailes transversales (26) n'atteint pas ledit plan parallèle à ladite surface de support plate (3) de la base (2) sur lequel les bords desdites deux ailettes (7) sont agencés.
